(19) Europäisches Patentamt
European Patent Office
Office européen des brevets

(11) **EP 0 694 785 B1**

## (12) EUROPEAN PATENT SPECIFICATION

(45) Date of publication and mention
of the grant of the patent:
**21.06.2000 Bulletin 2000/25**

(51) Int Cl.7: **G01P 15/09**

(21) Application number: **95305275.0**

(22) Date of filing: **28.07.1995**

(54) **Acceleration sensor**

Beschleunigungsmessaufnehmer

Capteur d'accélération

(84) Designated Contracting States:
**DE ES FR GB IT SE**

(30) Priority: **29.07.1994 JP 17832394**

(43) Date of publication of application:
**31.01.1996 Bulletin 1996/05**

(73) Proprietors:
• **THE WHITAKER CORPORATION**
**Wilmington, Delaware 19808 (US)**
• **Megacera Inc**
**Hidaka-shi, Saitama-ken 350-12 (JP)**

(72) Inventors:
• **Miyachi, Akihiro,**
**c/o AMP Technology Japan, Ltd.**
**Fuchu, Tokyo 183 (JP)**

• **Shirai, Hiroshi, c/o AMP Technology Japan, Ltd.**
**Fuchu, Tokyo 183 (JP)**
• **Ohshima, Ryuichi,**
**c/o AMP Technology Japan, Ltd.**
**Fuchu, Tokyo 183 (JP)**
• **Ohmori, Yasuo, c/o Megacera Inc.**
**Saitama-ken 350-12 (JP)**

(74) Representative: **Warren, Keith Stanley et al**
**BARON & WARREN**
**18 South End**
**Kensington**
**London W8 5BU (GB)**

(56) References cited:
**EP-A- 0 312 384         DE-A- 3 026 394**
**US-A- 4 505 014         US-A- 4 752 053**

**Description**

This invention relates to acceleration sensors employing sensing devices made of a piezoelectric ceramic in the form of an elongated cantilever structure.

Acceleration sensors of this type comprise an elongated sensing device in the form of an elongate beam structure to which acceleration is applied, and they make it possible to measure the acceleration applied to the sensing device by detecting the piezoelectricity generated in the sensing device due to the bending caused by the acceleration. Typically the elongate beam structure is in the form of a cantilever with one end restrained and the other end being free. Both ends can however be constrained. The sensing element is usually connected to a circuit designed to detect the piezoelectricity generated by the sensing device. In the acceleration sensors of this type, the sensing device is usually enclosed in a plastic package to facilitate the handling of the acceleration sensor.

Sensing devices used in the acceleration sensors of this kind are usually of two types. The first type is a sensor comprising two layers of piezoelectric ceramic of lead zirconate-titanate (PZT) glued together by an adhesive. The sensing elements of this kind are further divided into bi-morph structures in which two layers of polarized piezoelectric ceramic of PZT are glued in such a manner that the polarization directions of the two layers are opposite, and into structures in which a layer of polarized piezoelectric ceramic of PZT is glued together with a layer of non-polarized piezoelectric PZT ceramic.

Cantilevered sensing devices of this type including two layers of piezoelectric ceramic are usually made of identical piezoelectric ceramic layers and the components are usually of the same thickness.

Another type of sensing element comprises a piezoelectric polymer (for example, polyvinylidene fluoride or PVDF) and of a metal sheet glued together.

In many cases, in either type of the piezoelectric sensors, a silver or an aluminum layer is affixed to a surface of the piezoelectric element as an electrode.

Since the modulus of elasticity of the piezoelectric polymer is 100 times lower than the modulus of elasticity of the metal, in the sensors made of a piezoelectric polymer and a metal, the modulus of elasticity of the piezoelectric polymer can be neglected, and the acceleration sensors can be implemented as a cantilevered structure comprising a 0.1-0.3 mm thick metal substrate with a 0.02-0.1 mm thick layer of the piezoelectric polymer glued to it.

A piezoelectric acceleration sensor, functioning as an oscillation type sensor, is proposed in EP-A-312 384 which discloses a sensing device comprising a piezoelectric polymer membrane element having a through hole and laminated to a metal diaphragm having a through hole concentric with the hole of the piezoelectric element. The resulting laminate is mounted in a stretched manner in an annular fixing member. In this type of sensor, the piezoelectric polymer element has a low Young's modulus as compared to a ceramic piezoelectric element and the oscillation mode is determined largely by the thickness, diameter and Young's module of the metal diaphragm.

The disadvantage of the sensors comprising two layers of piezoelectric ceramic glued together is that they are fragile and do not withstand shocks well. Because of their fragility, they require very careful handling, and the chances of damage to packaged sensors is very high.

It is also desirable that the sensing element of the acceleration sensors has a large electrostatic capacity. In order to increase the electrostatic capacity of the sensing element of this type, it is necessary to increase the surface of the piezoelectric ceramic constituting the sensing device and to decrease its thickness. However, the sensing elements of this type must possess a certain strength, and the thickness of the glued layers of ceramic must be higher than some certain value (usually above 100 micrometers), which makes it difficult to increase electrostatic capacity by making them thinner. At the same time, if the capacity is increased by an increase in the surface area of the glued ceramic pieces, the overall dimensions of the sensing element are increased, thus making it difficult to obtain a small size acceleration sensor.

Another disadvantage of the sensing elements of this type is a low accuracy of the thickness of the finished sensing elements and the scatter of their temperature characteristics resulting from the fact that they are made by gluing together ceramic parts.

On the other hand, the sensing elements of the type comprising a piezoelectric polymer PVDF affixed to a metal substrate can withstand shocks much better because the metal substrate plays the role of a reinforcing element.

However, the specific inductive capacity of the PVDF polymer is much lower than that of the PZT ceramic, thus making it impossible to achieve high values of electrostatic capacity. When PVDF is used as a sensing element, its actual electrostatic capacity does not exceed 20 pF in practical applications. When the sensing elements having such a low electrostatic capacity are used at a low cut-off frequency of the order of 20 Hz, it is necessary to use a very high resistance from several MOhms to several GOhms in the circuit. Since resistors of such high values are expensive, the cost of the circuit is rather high.

Another disadvantage of the PVDF-based sensors is a low Curie temperature which is of the order of 125°C, thus rendering them susceptible to high temperatures. This represents certain difficulties if an acceleration sensor of this type must be affixed to a printed circuit board by an SMT method because the heat from the solder reflow can be transmitted through the leads, causing alterations of the characteristics of the sensing element.

This invention was made taking into consideration the information mentioned above, and its purpose is to offer an acceleration sensor with a sensing element having a low output scatter, a high S/N ratio and a wide dynamic range as well as being impact and heat resistance. The sensing element according to this invention also should be of small size while having a high electrostatic capacity.

The invention consists in an acceleration sensor having a sensing device comprising a layer of piezoelectric material glued to a metal substrate, characterised in that the sensing device is a beam, the piezoelectric material is a layer of piezoelectric ceramic having a thickness $T_1$, and the metal substrate has a thickness from 0.5 $T_1$ to 1.3 $T_1$.

Practically any metal substrate can be used in combination with the piezoelectric ceramic in which it plays the role of a reinforcing member; however, it is desirable that the metal substrate has a thermal expansion coefficient close to that of the piezoelectric ceramic. The metal substrate can be also used as a path for the transmission of the electric signal generated by the bending of the piezoelectric ceramic element.

Lead titanate-zirconate (PZT) and $BaTiO_3$ piezoelectric ceramic may be used in the sensing element. An electrode made of silver, aluminum or other metal should be applied to a surface of the piezoelectric ceramic for the purpose of the transmission of piezoelectric signals generated when the piezoelectric ceramic element is bent.

From the standpoint of electrostatic capacity, it is desirable to use the piezoelectric ceramic of a small thickness $T_1$, however, there are limits to it from the standpoint of dampproof characteristics of the sensing device, its dielectric strength during the poling and the convenience of handling during the manufacturing process. Generally, the thickness can be within the range of 0.03-0.2 mm, preferably within 0.05-0.1 mm. The range of thickness $T_2$ of the metal sheet to which the ceramic elements are glued is determined by the following considerations.

With an increase in the thickness of the metal sheet, the rigidity of the sensing device becomes higher, thus reducing its ability to bend. This leads to a decrease in the amount of piezoelectricity generated by the piezoelectric ceramic per unit of acceleration, thus reducing the sensitivity of the sensing device.

On the other hand, if the metal sheet is so thin that it approaches zero, the neutral line of the bending of the sensing device shifts toward the center line of the thickness of the piezoelectric ceramic. When the neutral line of the bending of the sensing device moves close to the center line of the thickness of the piezoelectric ceramic and the electric charges generated by the reaction of the piezoelectric ceramic to the bending on the side where the neutral line is extended in the direction of the center line and where it is contracted in the direction of the center line are mutually neutralized, thereby resulting in a decrease in the amount of the generated piezoelectricity, thus leading to a reduced sensitivity of the sensing device. Thus, the thickness of the sensing device must be sufficient so that the natural bending line is not within the piezoelectric ceramic and so that electric charges generated on one side of the neutral line will not cancel electric charges generated on the other side of the neutral bending line.

A wide dynamic range and a high S/N ratio can be obtained by using an arbitrary ratio of thicknesses of the piezoelectric ceramic and the metal substrate. However, this method cannot produce satisfactory results from the standpoint of a low scatter of the outputs. In order to obtain a practically usable acceleration sensor, it is necessary to properly select the ratio of these thicknesses.

The thickness $T_1$ of the piezoelectric ceramic used in the sensing device is determined based on the properties of the piezoelectric ceramic, dimensions of the cantilevered structure, electrostatic capacity, etc., and the thickness of the metal sheet is determined as 0.5-1.3 of the value of $T_1$.

According to this invention, the sensing device is made of a metal substrate and a piezoelectric ceramic, thus imparting to the sensing device outstanding heat-resistant qualities and strength.

Due to outstanding heat-resistant characteristics of the sensing device, one end of the leads of the acceleration sensor can be soldered to the base board when the sensor is mounted to the board. Because of this, acceleration sensors can be mounted using SMT methods, thus simplifying the assembly process. And the high strength of the sensing device makes the handling of the sensing device easier and greatly reduces the possibility of damage to the sensing device during its packaging.

Since the piezoelectric ceramic is glued on a metal substrate, it is possible to make its thickness smaller than in conventional devices, for example, of the order of 50 mcm. This makes it possible to reduce the size of the sensing device and to considerably increase electrostatic capacity.

If the thickness of the metal substrate is from approximately 0.5 to about 1.3 of the thickness of the piezoelectric ceramic $T_1$, a sensing device having a high S/N ratio, a wide dynamic range and a small scatter of the outputs is obtained.

An embodiment of the invention will now be described by way of example with reference to the accompanying drawings in which:

Figure 1 is a perspective view of the sensing device used in an acceleration sensor according to this invention.

Figure 2 is a perspective view of a holding structure for the sensing device shown in Figure 1.

Figure 3 is a cross-sectional view taken along line 3-3 of Figure 2.

Figure 4 is a schematic diagram showing test equipment for testing sensing devices.

Figure 5 is a schematic diagram of a test circuit shown in Figure 4.

According to this invention, the use of a sensing device comprising a piezoelectric ceramic glued to a metal substrate whose thickness is within a certain range makes it possible to obtain an acceleration sensor which is easy to handle due to high impact resistance and which can be incorporated in a circuit at a low cost while having a high S/ N ratio, a wide dynamic range and a small scatter of the outputs.

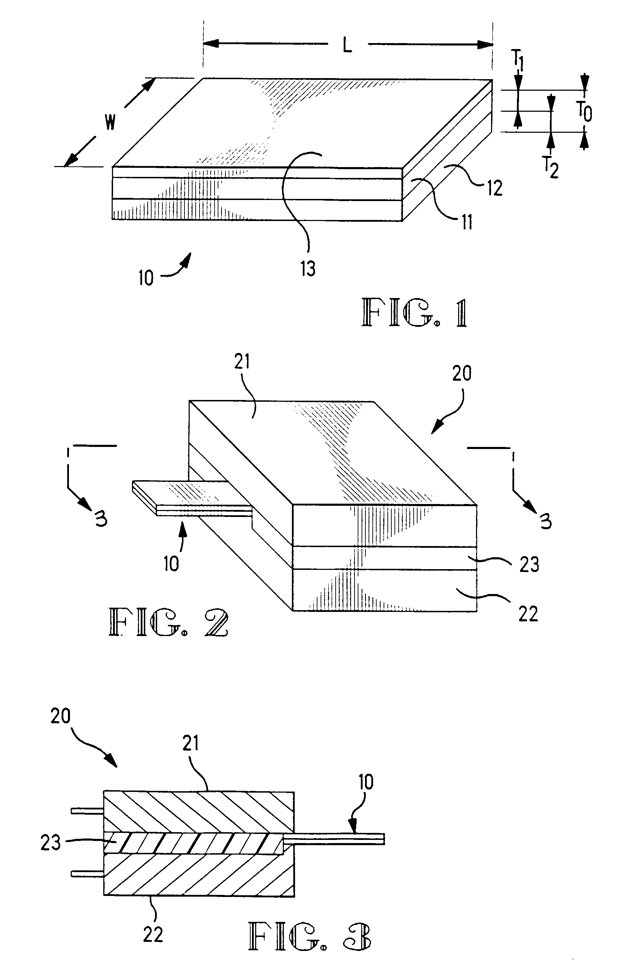

Figure 1 is a perspective view of an embodiment the sensing device used in an acceleration sensor according to this invention. As can be seen from Figure 1, the sensing device 10 comprises a piezoelectric ceramic layer 11 having length L, width W and thickness $T_1$ glued to a metal substrate 12 having length L and thickness $T_2$, with an electrode 13 made of silver, copper or other suitable metal affixed to one surface of the piezoelectric ceramic layer 11. The thickness $T_2$ of the metal subtrate 12 is 0.5-1.3 times of the thicknes$_s$ of $T_1$ of the piezoelectric ceramic layer 11.

For the materials used in the piezoelectirc ceramic layer 11, PZT piezoelectric ceramic of grades M, T, U, D and B materials, all of which are produced by Megacera Co., Ltd., can be used. The characteristics of these piezoelectric ceramics are shown in TABLE 1.

TABLE 1

| Grades of piezoelectric ceramics | M | T | U | D | B |
|---|---|---|---|---|---|
| Specific inductive capacity $e_{33}/e_0$) | 1800 | 2500 | 1450 | 4500 | 1550 |
| Piezoelectric output constant ($g_{61}$) [x $10^{-8}$ V/N] | -10.3 | -9.3 | -11.5 | -8.75 | -10.6 |
| Modulus of elasticity ($Y_{11}$) [x $10^{10}$ N/m$^2$] | 6.5 | 6.5 | 7.1 | 6.7 | 7.4 |
| Density [x $10^6$ kg/m$^3$] | 7.7 | 7.7 | 7.8 | 7.8 | 7.5 |

For the materials used in the metal substrate 12, such materials as aluminum, phosphor bronze, copper, alloy 42, stainless steel, etc. can be used. The characteristics of these metal materials are given in TABLE 2.

TABLE 2

| Types of metal materials | Aluminum | Phosphorus Bronze | Copper | Alloy 42 | Stainless Steel |
|---|---|---|---|---|---|
| Modulus of elasticity [x $10^9$ N/m$^2$] | 70 | 120 | 130 | 155 | 197 |
| Density [x $10^3$ kg/m$^3$] | 2.70 | 8.84 | 8.93 | 8.15 | 7.91 |
| Poisson's ratio | 0.36 | 0.38 | 0.37 | 0.28 | 0.30 |

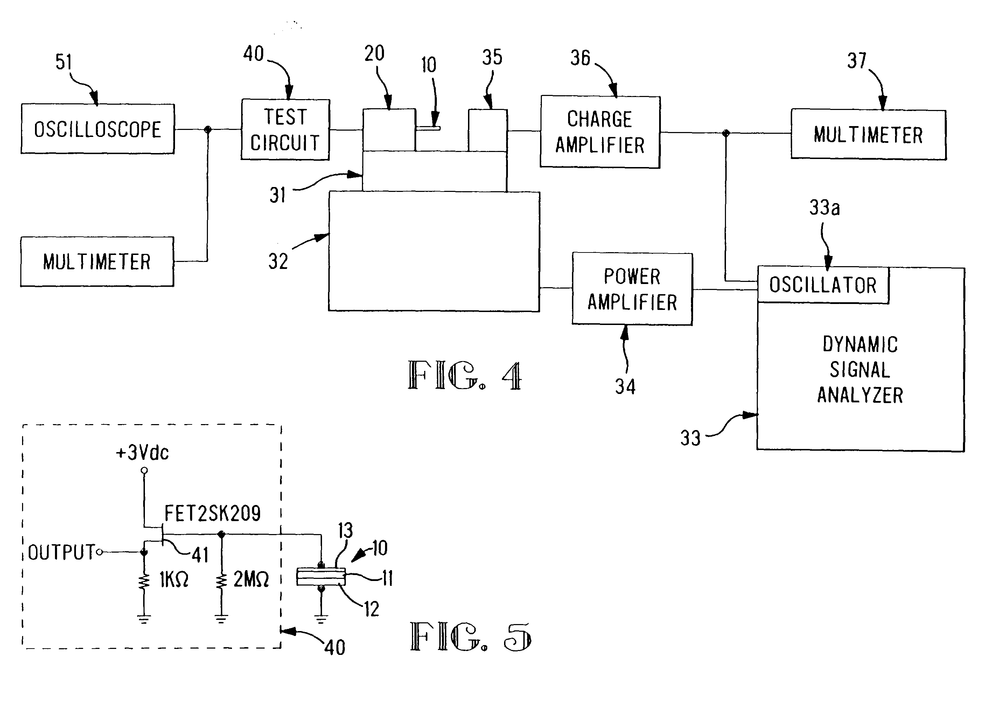

Next, experiments conducted for the purpose of determining the sensitivity and other characteristics of the sensing device by using various types of the piezoelectric ceramics and metal materials and by varying the ratio of their thicknesses ($T_2/T_1$) will be explained. Figure 2 is a perspective view of the structure holding the sensing device, and Figure 3 is a cross-sectional view taken along line 3-3 of Figure 2. Figure 4 is a schematic diagram showing the test equipment. Figure 5 depicts the circuit used in the test equipment shown in Figure 4.

First, the sensing device 10 is secured as a cantilevered structure in the holding structure 20 shown in Figure 2. The holding structure 20 comprises a metal upper mold member 21, a metal lower mold member 22 and a middle mold member 23 which is made of a suitable resin and insulates the upper mold member 21 and lower member mold 22 from each other. The sensing device 10 is placed between the upper mold member 21 and the lower mold member 22. In addition, the upper mold member 21 is in contact with the electrode layer 13, and the lower mold member 22 is in contact with the metal substrate 12. The portion of the sensing device retained by the holding structure 20 is one fifth of the entire length of the sensing device.

The holding structure 20 with the sensing device retained in it is affixed on the top of a B&K vibrator 32 by means of a holder 31. Signals produced by a generator 33a located inside the dynamic signal analyzer 33 (Hewlett Packard HP 3562)are amplified by power amplifier 34 (B&K 2706) and applied to the vibrator 32. The monitoring signals for the amplitude and frequency of the vibrator 32 are produced by the standard pick-up 35 (B&K 2635)and are fed through the charge amplifier 36 to the multimeter 37.

The terminal of the upper mold member 21 of the holding structure 20 is connected to the test circuit 40, and the terminal of the lower mold member 22 is grounded. As can be seen from Figure 5, the signal line from the piezoelectric ceramic element 11 is connected to the gate of FET 41 of the test circuit 40. The output from the drain of FET 41 is supplied to an oscilloscope 51 (COR 5502), multimeter 52 or to the dynamic signal analyzer 33, thus making it possible to determine the sensitivity [mV/G] of the sensing device 10, the threshold of the acceleration detection, a cut-off frequency at -3 dB, etc.

The results of measurements are given in TABLES 3, 4, and 5. TABLE 3 contains the results of measurements conducted on the M material embodiment specimens (from 1 to 15) of Megacera Co., Ltd. (5 mm long, 1.2 mm wide, 50 mcm thick) with various metal substrates (5 mm long, 1.2 mm wide) whose thicknesses $T_2$ vary with respect to the thickness of the M material within the range of $\frac{T_2}{T_1}$ ratio from 0.5 to 1.3.

TABLE 4 depicts results of tests conducted on specimens 1 through 10 made also of M material (5 mm long, 1.2 mm wide, 50 mcm thick) attached to various metal substrates (5 mm long, 1.2 mm wide) of different thicknesses $T_2$ taken in the $\frac{T_2}{T_1}$ ratio of 0.4 or 1.4. Specimen 11 was made of a PVDF material (5 mm long, 1.2 mm wide, 28 mcm thick) affixed to a plate made of phosphor bronze (5 mm long, 1.2 mm wide, 200 mcm thick).

TABLE 5 contains results of measurements conducted on specimens Nos. 16 through 30 made of D material of Megacera Co., Ltd. (5 mm long, 1.2 mm wide, 50 mcm thick) affixed to various metal substrates (5 mm long, 1.2 mm wide) whose thicknesses $T_2$ vary with respect to the thickness of M material within the range of $\frac{T_2}{T_1}$ ratio from 0.5 to 1.3.

As is evident from the data shown in TABLES 3-5, the sensing devices of the specimens 1 through 30 have high sensitivity with only slight scatter between individual specimens, while the sensing devices of the comparison specimens 1 through 11 have low sensitivity with a considerable scatter between individual specimens rendering them unsuitable for practical applications. Symbols [O] in the TABLES 3-5 denote excellent results, and symbols [X] denote inferior results.

Another series of tests involved the determination of an optimal value of the $T_2/T_1$ ratio within the limits of 0.5 to 1.3. The tests were conducted by measuring sensitivity of specimens of sensing devices made of M, T, U, D and B materials (thickness of 50 mcm) glued to various metal substrates (thicknesses of 25, 30, 35, 40, 45, 50, 60 and 65 mcm).

These results are shown in TABLE 6 wherein the thicknesses (in mcm) of the metal substrates giving a maximum sensitivity for every specific combination of piezoelectric ceramics and metal substrates are setforth.

TABLE 6

|  |  |  |  |  |  |
|---|---|---|---|---|---|
|  |  |  |  |  | Units: mcm |
|  | **Metal substrates** |  |  |  |  |
| **Piezoelectric ceramics** | **Aluminum** | **Phosphor bronze** | **Copper** | **Alloy 42** | **Stainless steel** |
| M | 45 | 45 | 45 | 45 | 45 |
| T | 45 | 45 | 45 | 45 | 45 |
| U | 45 | 50 | 45 | 45 | 40 |
| D | 45 | 50 | 50 | 50 | 50 |
| B | 45 | 45 | 45 | 45 | 45 |

As can be seen from Table 6, despite the fact that these metal materials differ from each other by their modulus of elasticity, density and Poisson's ratio (see Table 2), they all produce a maximum sensitivity of the sensing device at approximately the same thickness (40-50 mcm). From these data, it follows that the sensitivity of a sensing device depends largely on the ratio of thicknesses $T_2/T_1$ of the piezoelectric ceramic and metal substrate rather than on the type of these materials. The ratio of thicknesses $T_2/T_1$ can vary in a rather wide range, but optimal sensitivity can be obtained under the condition that $T_2/T_1 = 0.5$ to 1.3.

In addition, if the resonant frequency of the sensing device is close to the natural frequency of the device whose acceleration is being measured or to its high frequency, a layer of a damping material, such as a high polymer material, is glued over either the piezoelectric ceramic or over the metal substrate. This is possible because the modulus of elasticity of such high polymer material is usually of the order of one hundredth of that of the piezoelectric ceramics or the metal substrate, and the sensing device according to this invention can be used even in such cases.

TABLE 3

| Example No. | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Type of piezoelectric ceramic | M | M | M | M | M | M | M | M | M | M | M | M | M | M | M |
| Thickness of piezoelectric ceramic | 50 | 50 | 50 | 50 | 50 | 50 | 50 | 50 | 50 | 50 | 50 | 50 | 50 | 50 | 50 |
| Type of metal substrate | 42 alloy | 42 alloy | 42 alloy | phosphor bronze | phosphor bronze | phosphor bronze | copper | copper | copper | aluminium | aluminium | aluminium | SUS | SUS | SUS |
| Thickness of metal substrate (μm) | 25 | 45 | 65 | 25 | 45 | 65 | 25 | 45 | 65 | 25 | 45 | 65 | 25 | 45 | 65 |
| $T_2 / T_1$ | 0.5 | 0.9 | 1.3 | 0.5 | 0.9 | 1.3 | 0.5 | 0.9 | 1.3 | 0.5 | 0.9 | 1.3 | 0.5 | 0.9 | 1.3 |
| Dimension of sensor (mm) | L=5 W=1.2 T=0.075 | L=5 W=1.2 T=0.095 | L=5 W=1.2 T=0.115 | L=5 W=1.2 T=0.075 | L=5 W=1.2 T=0.095 | L=5 W=1.2 T=0.115 | L=5 W=1.2 T=0.075 | L=5 W=1.2 T=0.095 | L=5 W=1.2 T=0.115 | L=5 W=1.2 T=0.075 | L=5 W=1.2 T=0.095 | L=5 W=1.2 T=0.115 | L=5 W=1.2 T=0.075 | L=5 W=1.2 T=0.095 | L=5 W=1.2 T=0.115 |
| Mounting of sensor | canti-lever | canti-lever | canti-lever | canti-lever | canti-lever | canti-lever | canti-lever | canti-lever | canti-lever | canti-lever | canti-lever | canti-lever | canti-lever | canti-lever | canti-lever |
| Capacitance (PF) | 1.800 | 1.800 | 1.800 | 1.800 | 1.800 | 1.800 | 1.800 | 1.800 | 1.800 | 1.800 | 1.300 | 1.300 | 1.300 | 1.300 | 1.300 |
| Sensitivity (mV/G) at 120 Hz | 2.1 | 2.3 | 2.1 | 2.1 | 2.3 | 2.1 | 2.1 | 2.3 | 2.1 | 2.2 | 2.3 | 2.0 | 2.1 | 2.3 | 2.1 |
| Minimum detectable acceleration SN=1 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| Fluctuation in Sensitivity $\delta$(N=10) | 0.1 | 0.05 | 0.09 | 0.10 | 0.06 | 0.08 | 0.09 | 0.05 | 0.09 | 0.09 | 0.05 | 0.08 | 0.06 | 0.05 | 0.09 |
| 3db cutoff frequency (Hz) | 44 | 44 | 44 | 44 | 44 | 44 | 44 | 44 | 44 | 44 | 44 | 44 | 44 | 44 | 44 |
| Reflow characteristic | O | O | O | O | O | O | O | O | O | O | O | O | O | O | O |
| Ease of packaging | O | O | O | O | O | O | O | O | O | O | O | O | O | O | O |
| Overall judgement | O | O | O | O | O | O | O | O | O | O | O | O | O | O | O |

EP 0 694 785 B1

## TABLE 4

| Reference No. | 1 | 2 | 3 | 4 | 5 | 6 | 7 | 8 | 9 | 10 | 11 |
|---|---|---|---|---|---|---|---|---|---|---|---|
| Type of piezoelectric ceramic | M | M | M | M | M | M | M | M | M | M | PVDF |
| Thickness of piezoelectric ceramic | 50 | 50 | 50 | 50 | 50 | 50 | 50 | 50 | 50 | 50 | 28 |
| Type of metal substrate | 42 alloy | 42 alloy | phosphor bronze | phosphor bronze | copper | copper | aluminium | aluminium | SUS | SUS | phosphor bronze |
| Thickness of metal substrate (μm) | 20 | 70 | 20 | 70 | 20 | 70 | 20 | 70 | 20 | 70 | 200 |
| $T_2 / T_1$ | 0.4 | 1.4 | 0.4 | 1.4 | 0.4 | 1.4 | 0.4 | 1.4 | 0.4 | 1.4 | 7.1 |
| Dimension of sensor (mm) | L=5 W=1.2 T=0.08 | L=5 W=1.2 T=0.12 | L=5 W=1.2 T=0.08 | L=5 W=1.2 T=0.12 | L=5 W=1.2 T=0.08 | L=5 W=1.2 T=0.12 | L=5 W=1.2 T=0.08 | L=5 W=1.2 T=0.12 | L=5 W=1.2 T=0.08 | L=5 W=1.2 T=0.12 | L=4.5 W=1.2 T=0.228 |
| Mounting of sensor | canti-lever | canti-lever | canti-lever | canti-lever | canti-lever | canti-lever | canti-lever | canti-lever | canti-lever | canti-lever | canti-lever |
| Capacitance (PF) | 1.800 | 1.800 | 1.800 | 1.800 | 1.800 | 1.800 | 1.800 | 1.800 | 1.800 | 1.800 | 22 |
| Sensitivity (mV/G) at 120 HZ | 1.4 | 1.5 | 1.3 | 1.4 | 1.5 | 1.4 | 1.4 | 1.5 | 1.4 | 1.3 | 0.7 |
| Minimum detectable acceleration SN=1 | 0.1 | 0.1 | 0.1 | 0.09 | 0.1 | 0.15 | 0.1 | 0.09 | 0.08 | 0.05 | 0.1 |
| Fluctuation in Sensitivity (mV/G) $\delta$(N=10) | 0.32 | 0.30 | 0.35 | 0.30 | 0.35 | 0.36 | 0.30 | 0.40 | 0.38 | 0.32 | 0.05 |
| -3dB cutoff frequency (HZ) | 44 | 44 | 44 | 44 | 44 | 44 | 44 | 44 | 44 | 44 | 4.0K |
| Reflow characteristic | ○ | ○ | ○ | ○ | ○ | ○ | ○ | ○ | ○ | ○ | × |
| Ease of packaging | ○ | ○ | ○ | ○ | ○ | ○ | ○ | ○ | ○ | ○ | ○ |
| Overall judgement | × | × | × | × | × | × | × | × | × | × | × |

EP 0 694 785 B1

## TABLE 5

| Example No. | 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|
| Type of piezoelectric ceramic | D | D | D | D | D | D | D | D | D | D | D | D | D | D | D |
| Thickness of piezoelectric ceramic | 50 | 50 | 50 | 50 | 50 | 50 | 50 | 50 | 50 | 50 | 50 | 50 | 50 | 50 | 50 |
| Type of metal substrate | 42 alloy | 42 alloy | 42 alloy | 42 alloy | 42 alloy | 42 alloy | 42 alloy | 42 alloy | 42 alloy | 42 alloy | 42 alloy | 42 alloy | SUS | SUS | SUS |
| Thickness of metal substrate (μm) | 25 | 50 | 65 | 25 | 50 | 65 | 25 | 50 | 65 | 25 | 50 | 65 | 25 | 50 | 65 |
| $T_2 / T_1$ | 0.5 | 1.0 | 1.3 | 0.5 | 1.0 | 1.3 | 0.5 | 1.0 | 1.3 | 0.5 | 1.0 | 1.3 | 0.5 | 1.0 | 1.3 |
| Dimension of sensor (mm) | L=5 | L=5 | L=5 | L=5 | L=5 | L=5 | L=5 | L=5 | L=5 | L=5 | L=5 | L=5 | L=5 | L=5 | L=5 |
| | W=1.2 | W=1.2 | W=1.2 | W=1.2 | W=1.2 | W=1.2 | W=1.2 | W=1.2 | W=1.2 | W=1.2 | W=1.2 | W=1.2 | W=1.2 | W=1.2 | W=1.2 |
| | T=0.075 | T=0.095 | T=0.115 | T=0.075 | T=0.095 | T=0.115 | T=0.075 | T=0.095 | T=0.115 | T=0.075 | T=0.095 | T=0.115 | T=0.075 | T=0.095 | T=0.115 |
| Mounting of sensor | canti-lever | canti-lever | canti-lever | canti-lever | canti-lever | canti-lever | canti-lever | canti-lever | canti-lever | canti-lever | canti-lever | canti-lever | canti-lever | canti-lever | canti-lever |
| Capacitance (PF) | 2.900 | 2.900 | 2.900 | 2.900 | 2.900 | 2.900 | 2.900 | 2.900 | 2.900 | 2.900 | 2.900 | 2.900 | 2.900 | 2.900 | 2.900 |
| Sensitivity (mV/G) at 120 Hz | 1.4 | 1.5 | 1.3 | 1.4 | 1.5 | 1.4 | 1.4 | 1.5 | 1.4 | 1.3 | 1.5 | 1.4 | 1.4 | 1.5 | 1.4 |
| Minimum detectable acceleration SN=1 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| Fluctuation in sensitivity (mV/G) $\sigma$(N=10) | 0.06 | 0.04 | 0.06 | 0.05 | 0.03 | 0.05 | 0.07 | 0.04 | 0.06 | 0.07 | 0.04 | 0.06 | 0.06 | 0.04 | 0.06 |
| -3dB cutoff frequency (Hz) | 27 | 27 | 27 | 27 | 27 | 27 | 27 | 27 | 27 | 27 | 27 | 27 | 27 | 27 | 27 |
| Reflow characteristic | O | O | O | O | O | O | O | O | O | O | O | O | O | O | O |
| Ease of packaging | O | O | O | O | O | O | O | O | O | O | O | O | O | O | O |
| Overall judgement | O | O | O | O | O | O | O | O | O | O | O | O | O | O | O |

EP 0 694 785 B1

**Claims**

1. An acceleration sensor having a sensing device (10) comprising a layer (11) of piezoelectric material glued to a metal substrate (12), characterised in that the sensing device is a beam (10), the piezoelectric material is a layer (11) of piezoelectric ceramic having a thickness $T_1$, and the metal substrate has a thickness from $0.5\,T_1$ to $1.3\,T_1$.

2. The acceleration sensor of claim 1, wherein the sensing beam (10) has a cantilever configuration.

3. The acceleration sensor of claim 1 or 2, wherein the metal substrate (120 and the piezoelectric ceramic layer (11) have a thermal expansion coefficient that is substantially equal.

4. The acceleration sensor of claim 1, 2 or 3, wherein the metal substrate (12) comprises a path for the transmission of an electrical signal generated by the bending of the piezoelectric ceramic layer (11).

5. The acceleration sensor of any preceding claim, wherein the piezoelectric ceramic layer (11) is formed of a material selected from the group consisting of lead titanate-zirconate (PZT) and $BaTiO_3$.

6. The acceleration sensor of any preceding claim, wherein the metal substrate (12) is formed of a material selected from the group consisting of aluminum, phosphor bronze copper, alloy 42, and stainless steel.

7. The acceleration sensor of claim 5 or claims 5 and 6, wherein the piezoelectric ceramic layer (11) comprises PZT of grades M, T, U, D or B materials.

8. The acceleration sensor of any preceding claim, wherein the thickness of the piezoelectric ceramic layer (11) is within the range of 0.03-0.2mm.

9. The acceleration sensor of claim 8, wherein the thickness of the piezoelectric ceramic layer (11) is within the range from 0.05-0.1 mm.

10. The acceleration sensor of any preceding claim, wherein the thickness of the sensing device (10) is sufficient so that the neutral bending line is not within the piezoelectric ceramic layer (11) and so that electric charges generated on one side of the neutral line will not cancel electric charges generated on the other side of the neutral bending line.

**Patentansprüche**

1. Beschleunigungssensor mit einer Sensorvorrichtung (10), die eine Schicht (11) aus piezoelektrischem Material aufweist, die an ein Metallsubstrat (12) geklebt ist, dadurch gekennzeichnet, dass die Sensorvorrichtung ein Balken (10) ist, das piezoelektrische Material eine Schicht (11) aus Piezokeramik mit einer Dicke $T_1$ ist und das Metallsubstrat eine Dicke von $0,5\,T_1$ bis $1,3\,T_1$ hat.

2. Beschleunigungssensor nach Anspruch 1, bei dem der Sensorbalken (10) eine Auslegergestalt hat.

3. Beschleunigungssensor nach Anspruch 1 oder 2, bei dem das Metallsubstrat (12) und die Piezokeramikschicht (11) im wesentlichen den gleichen Wärmeausdehnungskoeffizienten haben.

4. Beschleunigungssensor nach Anspruch 1, 2 oder 3, bei dem das Metallsubstrat (12) einen Weg für die Übertragung eines elektrischen Signals aufweist, das durch das Biegen der Piezokeramikschicht (11) erzeugt wird.

5. Beschleunigungssensor nach einem der vorhergehenden Ansprüche, bei dem die Piezokeramikschicht (11) aus einem Material gebildet ist, das aus den Materialien Blei-Titanat-Zirkonat (PZT) und $BaTiO_3$ ausgewählt ist.

6. Beschleunigungssensor nach einem der vorhergehenden Ansprüche, bei dem das Metallsubstrat (12) aus einem Material gebildet ist, das aus den Materialien Aluminium, Phosphor-Bronze-Kupfer, Legierung 42 und rostfreiem Stahl ausgewählt ist.

7. Beschleunigungssensor nach Anspruch 5 oder Ansprüchen 5 und 6, bei dem die Piezokeramikschicht (11) PZT der Materialsorten M, T, U, D oder B aufweist.

8. Beschleunigungssensor nach einem der vorhergehenden Ansprüche, bei dem die Dicke der Piezokeramikschicht (11) im Bereich von 0,03 bis 0,2 mm liegt.

9. Beschleunigungssensor nach Anspruch 8, bei dem die Dicke der Piezokeramikschicht (11) im Bereich von 0,05 bis 0,1 mm liegt.

10. Beschleunigungssensor nach einem der vorhergehenden Ansprüche, bei dem die Sensorvorrichtung (10) so dick ist, dass die neutrale Biegeachse nicht innerhalb der Piezokeramikschicht (11) liegt und dass die elektrischen Ladungen, die auf einer Seite der neutralen Achse erzeugt werden, elektrische Ladungen, die auf der anderen Seite der neutralen Biegeachse erzeugt werden, nicht aufheben.


**Revendications**

1. Détecteur d'accélération comportant un dispositif détecteur (10) comprenant une couche (11) de matériau piézo-électrique collé à un substrat métallique (12), caractérisé en ce que le dispositif détecteur est une poutre (10), le matériau piézo-électrique est une couche (11) de céramique piézo-électrique ayant une épaisseur $T_1$ et le substrat métallique a une épaisseur allant de 0,5 $T_1$ à 1,3 $T_1$.

2. Détecteur d'accélération selon la revendication 1, dans lequel la poutre de détection (10) a une configuration en porte-à-faux.

3. Détecteur d'accélération selon la revendication 1 ou 2, dans lequel le substrat métallique (12) et la couche de céramique piézo-électrique (11) ont des coefficients de dilatation thermique qui sont sensiblement égaux.

4. Détecteur d'accélération selon la revendication 1, 2 ou 3, dans lequel le substrat métallique (12) comprend un chemin pour la transmission d'un signal électrique généré par la courbure de la couche de céramique piézo-électrique (11).

5. Détecteur d'accélération selon l'une quelconque des revendications précédentes, dans lequel la couche de céramique piézo-électrique (11) est formée d'un matériau choisi dans le groupe constitué du titanate-zirconate de plomb (PZT) et du $BaTiO_3$.

6. Détecteur d'accélération selon l'une quelconque des revendications précédentes, dans lequel le substrat métallique (12) est formé d'un matériau choisi dans le groupe constitué d'aluminium, de bronze et cuivre au phosphore, d'alliage 42 et d'acier inoxydable.

7. Détecteur d'accélération selon la revendication 5 ou les revendications 5 et 6, dans lequel la couche de céramique piézo-électrique (11) comprend du PZT de matériaux de degrés M, T, U, D ou B.

8. Détecteur d'accélération selon l'une quelconque des revendications précédentes, dans lequel l'épaisseur de la couche de céramique piézo-électrique (11) se trouve à l'intérieur de la plage allant de 0,03 à 0,2 mm.

9. Détecteur d'accélération selon la revendication 8, dans lequel l'épaisseur de la couche de céramique piézo-électrique (11) se trouve à l'intérieur de la plage allant de 0,05 à 0,1 mm.

10. Détecteur d'accélération selon l'une quelconque des revendications précédentes, dans lequel l'épaisseur du dispositif détecteur (10) est suffisante pour que la ligne de courbure neutre ne se trouve pas à l'intérieur de la couche de céramique piézo-électrique (11) et pour que les charges électriques générées d'un côté de la ligne neutre n'annulent par les charges électriques générées de l'autre côté de la ligne de courbure neutre.

FIG. 1

FIG. 2

FIG. 3

**FIG. 4**

**FIG. 5**

EP 0 694 785 B1